Europäisches Patentamt

**European Patent Office**

Office européen des brevets

(11) Publication number: **0 030 925**

**A1**

(12) **EUROPEAN PATENT APPLICATION**

(21) Application number: **80830107.1**

(22) Date of filing: **11.12.80**

(51) Int. Cl.³: **B 60 N 1/02**
**G 05 B 19/35**

(30) Priority: **17.12.79 IT 6942579**

(43) Date of publication of application:
**24.06.81 Bulletin 81/25**

(84) Designated Contracting States:
**DE FR GB IT SE**

(71) Applicant: **S.I.R.P. STUDI INDUSTRIALI
REALIZZAZIONE PROTOTIPI S.p.A.
Via A.Grandi 11
I-10024 Moncalieri (Torino)(IT)**

(72) Inventor: **Sito, Andrea
Via B. Panizza 3
I-10137 Torino(IT)**

(74) Representative: **Jacobacci, Filippo et al,
c/o Jacobacci-CASETTA & PERANI S.n.c. Via Alfieri, 17
I-10121 Torino(IT)**

(54) Driving position adjustment system for a motor vehicle.

(57) The invention relates to an adjustment system for automatically locating in pre-established positions those members of the driver's position in a motor vehicle which are
adjustable in position, such as steering wheel, squab and seat
back of the driver's seat, rear view mirror and the like. The
system comprises actuator means (10) connectable to an elec-
trical power source to cause a displacement of each adjustable member (7), sensor means (16, 17) for detecting the
position of each adjustable member (7) with respect to a
reference element (8), electrical control means connected to
the said sensor means (16, 17) and operable to control the
opening and the closing of the connection between the said
actuator means (10) and the electrical power source, and a
coded electrical key arranged to cooperate with the said electrical control means to cause the closure of the connection
between the said actuator means (10) and the source of electr-
icity in such a way as to determine the displacement of each
adjustable member (7). The said electrical control means are
operative to interrupt the connection between the actuator
means (10) and the electrical power source to set each adjust-
able member in position when the sensor means (16, 17)
detect the attainment by that member of a predetermined
position dependent on the code of the said electrical key.

./...

FIG. 2

- 1 -

## Driving Position Adjustment System
## For a Motor Vehicle

The present invention relates to an adjustment system for automatically locating in pre-established positions those members of the driver's position of a motor vehicle which are adjustable in position, such as the steering wheel, the squab and seat back of the driver's seat, the rear view mirror and the like.

The main characteristic of the adjustment system forming the subject of the invention resides in the fact that this system comprises:

actuator means connectable to a source of electrical power to cause a displacement of each adjustable member,

sensor means for detecting the position of each adjustable member with respect to a reference element,

electrical control means connected with the said sensor means and operable to control the opening and closing of the connection between the said actuator means and the electrical power source, and

a coded electrical key arranged to cooperate with the said electrical control means to cause the closure of the connection between the said actuator means and the electrical power source in such a way as to determine the displacement of each adjustable member,

said electrical control means being operative to interrupt the said connection whereby to set each adjustable member in position, when the said sensor means detect the attainment by that member of a pre-established po- position dependent on the code of the said coded electrical key.

The adjustment system according to the present invention can be employed in a motor vehicle to cause the various adjustable members of the driver's position (such as for example the steering wheel, the seat squab and seat back of the driver's seat, and the rear view mirror)to locate themselves automatically in pre-estab lished positions dependent on the code of the said coded electrical key when the user introduces this latter into a recess provided to receive it.

Further characteristics and advantages of the adjustment system according to the present invention will become apparent from the following description, made with reference to the annexed drawings, provided purely by way of non-limitative example, in which:
Figure 1 schematically illustrates the driver's position of a motor vehicle;
Figure 2 schematically illustrates, on an enlarged scale, a detail of Figure 1,
Figure 3 is a perspective view of a coded electrical key utilised in an adjustment system according to the present invention, and
Figure 4 to 8 schematically illustrate an adjustment system according to the present invention in five different phases of operation.

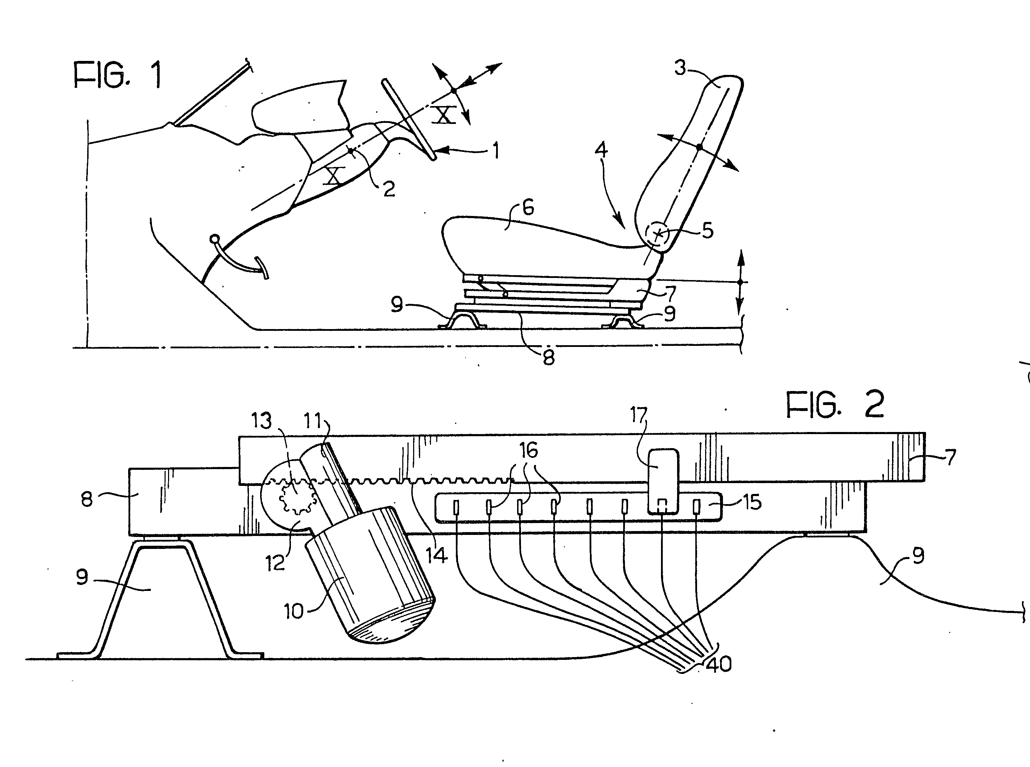

Figure 1 illustrates schematically several of those movable members which are adjustable in position, and which are present within the passenger compartment of a motor vehicle. In the example illustrated, the steering wheel structure 1 can be rotated about a transverse horizontal axis the position of which is indicated with reference numeral 2, and can be displaced in the direction of the axis X-X of the steering wheel 1. The seat back of a driver's seat 4 is indicated by reference numeral 3. The seat back 3 can be rotated about a transverse horizontal axis 5 with respect to the squab 6 of the seat 4. The squab 6, in turn, can be displaced vertically with respect to a support structure 7 mounted in a slidable manner on longitudinal guides 8 which are connected by means of supports 9 to the fixed structure of the motor vehicle.

The adjustment system according to the present invention can be utilised to automatically adjust the positions of any number of members. For example, automatic adjustment of the position of the internal rear view mirror and of the external rear view mirror could be provided.

Whatever the movable member which is to be adjusted in position, it will always be possible to provide an element which is rigidly movable with the adjustable member, and a fixed reference element relative to which said movable element is displaceable. In the case of the example of the guides for the longitudinal translation of the driver's seat 4, the movable element is constituted by the element 7, whilst the reference element is constituted by the element 8. As illustrated in detail in Figure 2, the system according to the invention comprises, for each movable element, an electric motor 10 for the control of the displacement of the movable element with respect to the reference element. In the example illustrated in Figure 2, the electric motor 10 has an output shaft 11 connected by means of a reduction gearbox 12 with a sprocket 13 which meshes with a rack 14 forming part of the movable element 7. In this manner, due to the mechanical transmission constituted by the reduction gearbox 12, the sprocket 13 and the rack 14, activation of the electric motor 10 causes translation of the movable element 7. An insulating support 15 is fixed to the reference element 8 and carries several aligned contact elements 16 which are spaced from one another. On the other hand, a wiper element 17 is fixed to the movable element 7 and is arranged to make electrical contact, successively, with the contact elements 16 during the displacement of the movable element 7 with respect to the reference element 8. Both the electrical motor 10 and the wiper element 17, and the contact element 16 are electrically connected with electrical control means which will be described in detail below.

It is evident that the contact elements 16, instead of being disposed on the reference element 8, could be disposed on the movable element 7. In this case the wiper element 17 would be mounted on the reference element 8. It is equally evident that where the wiper element 17 has to follow an arcuate path during the displacement of the movable element 7, the contact elements 16 must be disposed along a corresponding path so as to come into contact with the wiper element 17 successively during the displacement of the movable element 7.

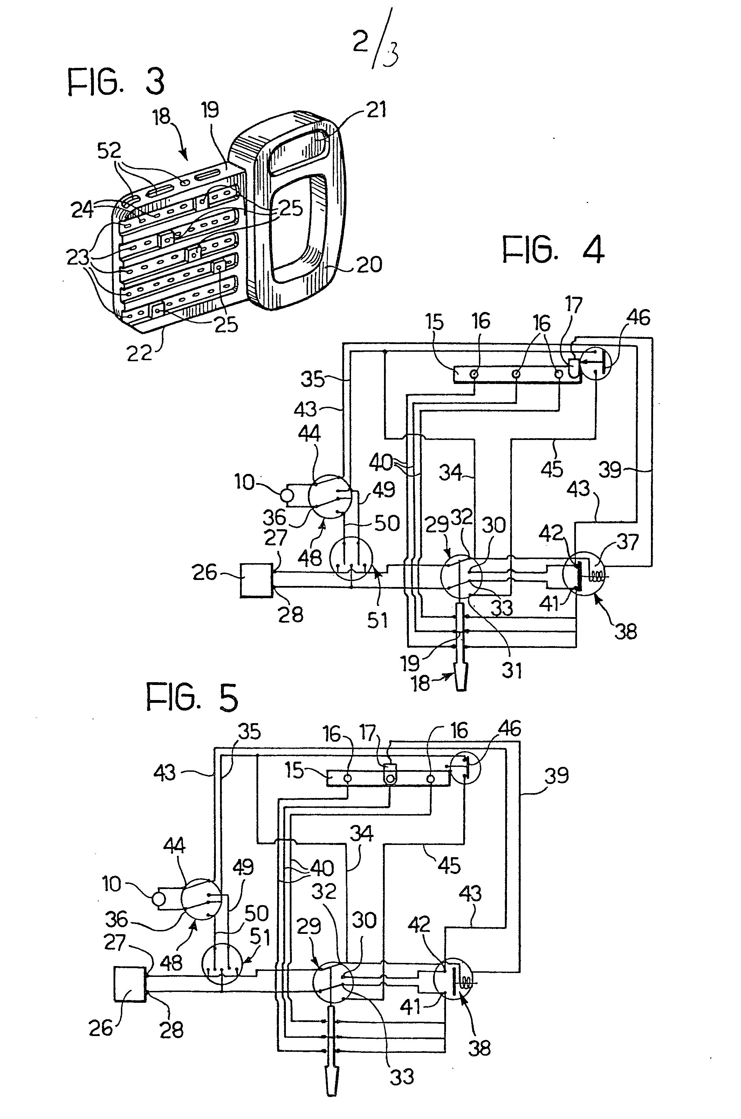

In Figure 3 there is indicated, in its entirety, a coded electrical key 3 comprising an insulating support 19 provided with a handle 20. This handle has a recess 21 intended to receive an identification plate. The support 19 of the key 18 is in the form of a flattened body having on each of its two major faces 22 a series of tracks 23 each corresponding to a movable element the position of which it is desired automatically to adjust. Each track 23 is provided with a plurality of seats 24 each of which corresponds to one of the contact elements 16 associated with the movable element the position of which is to be adjusted. Each track 23 is moreover provided with a contact pad 25 which can be received in any of the seats 24 to establish an electrical connection between the two major faces 22 of the support 19. As will be apparent from the following description, the adjustment system according to the invention results in the automatic displacement of the movable element 7 from the moment of introduction of the coded electrical key 18 into a socket arranged to receive it, until the movable element has been carried into a position in which the wiper element 17 enters into contact with the contact element 16 which corresponds to the seat 24 in which the contact pad 25 is inserted. The user therefore does not have to do any more than choose for each adjustable member of the driver's position, the position of this member which is the most comfortable for him to use, and to code the electrical key 18 consequently by inserting, for each of the tracks 23, a contact pad 25 in the seat corresponding to the final desired position of the adjustable member.

In Figures 4 to 8 there are schematically indicated the insulating support 15 rigidly connected to the reference element 8 and the contact elements 16 disposed on the insulating support 15. Also illustrated are the wiper element 17 rigidly connected to the movable element 7, the electric motor 10 for control of the displacement of the movable element 7 with respect to the reference element 8 (or, which amounts to the same thing, for the control of the dis-

placement of the wiper element 17 with respect to the
support 15), and the coded electrical key 18 provided
with a contact pad 19 inserted in one of the seats
corresponding to one of the contact elements 16.

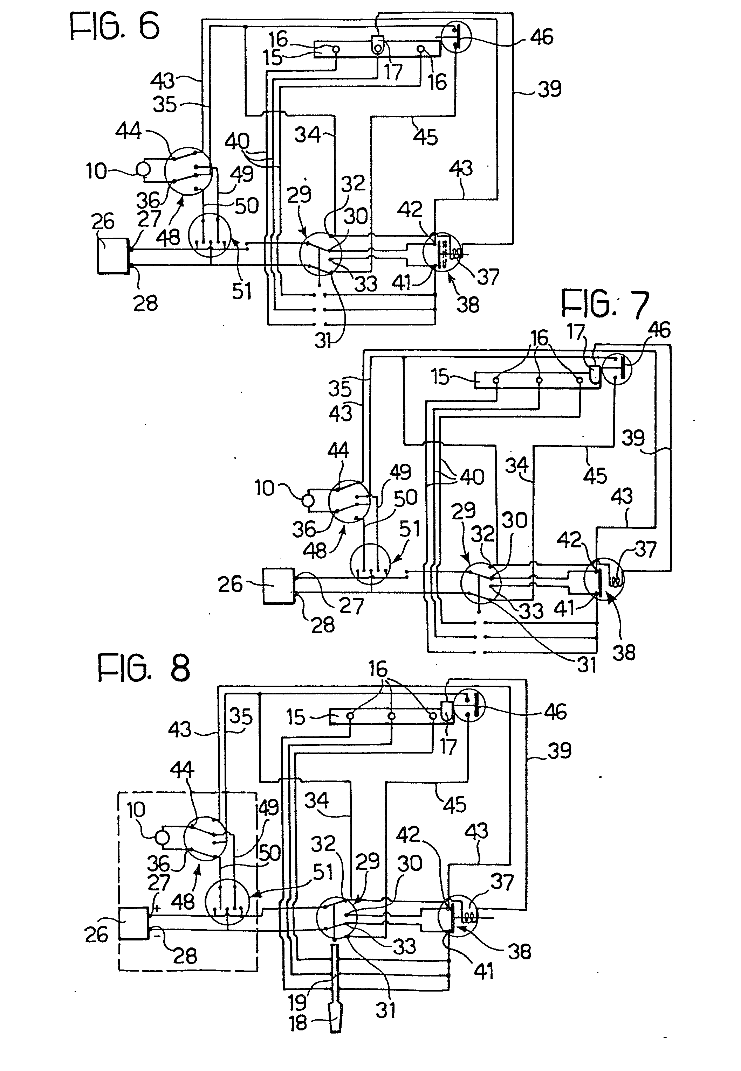

An electrical power source 26, preferably
constituted by the battery of the motor vehicle
has a first terminal 27 and a second terminal 28.
The electrical control means forming part of the adjustment system according to the invention include a
two-position switch 29 having a first position (illustrated in Figure 7) in which it puts the terminals 27,
28 of the source 26 into contact with two terminals 30,31, and a second position (illustrated in
Figure 4) in which it puts the two terminals 27,28 of
the source 26 into contact with two terminals 32,
33. The switch 29 is normally located in its first
working position and is displaced into its second
working position by the coded electrical key 18 upon
the insertion of this key. The terminal 32 is connected by means of a connecting lead 34 and a connecting
lead 35 to a terminal 36 of the electric motor 10.
The terminal 32 is moreover connected to a terminal
of an excitation winding 37 which controls the opening
and closing of a normally-closed movable contact 38.
The other terminal of the winding 37 is connected by
means of a lead 39 to the wiper element 17. The contact elements 16 are connected, by means of connecting
lead 40, to a terminal 41 which is connectable by
means of the movable contact 38 with a terminal 42.
This latter is connected by means of a lead 43 to the
second terminal 44 of the electric motor 10. The terminals 30,33 are connected to the terminals 42,41 respectively, whilst the terminal 31 is connected by means
of a lead 45 to the connecting lead 35 leading to
the terminal 36 of the electric motor 10. Interposed in the lead 45 is a normally closed movable contact 46 which is maintained open by the wiper element 17, or by an element rigidly connected to it, when the movable element 7 is located in its end position. A two-position switch 48, having a first position (illustrated in Figure 4) in which the terminals 44, 36 are connected to the leads 43, 35 respectively, and a second position (illustrated in Figure 8) in which the terminals 44, 36 are connected, respectively, to the two leads 49, 50 which in turn are connectable by means of a two-position switch 52, one to the terminal 27 and the other to the terminal 28 of the electrical power source 26, or vice versa.

The connecting leads 40 each have a discontinuity in correspondence with the region into which the coded electrical key is to be introduced. From the moment of introduction of the key, the contact pad 19 ensures that the terminal 41 only makes electrical contact with the contact element 16 whose connecting lead 40 comes into electrical contact with the pad 19.

The operation of the adjustment system according to the present invention is as follows:
At the time of introduction of the coded electrical key 18, each movable element 7 is located in its end position in correspondence with which the wiper element 17 maintains the movable contact 46 open. It is preferable that, in the case of the example of the movable element 7, this end position corresponds to the position of greatest retraction of the seat 4, whereby to allow the user to get easily into the driver's position before proceeding to the automatic adjustment of the various movable members. The introduction of the key 18 causes displacement of the switch 29 into its second working position illustrated in Figure 4. The terminal 27 of the source 26 thus comes into electrical contact, via the leads 34 and 35, with the terminal 36 of the electric motor 10, whilst the terminal 28 of the source 26 comes into electrical contact with the other terminal 44 of the electric motor 10 by means of the lead joining the terminals 33,41, the movable contacts 38 and the lead 43. It is to be observed that during this phase of operation the switch 48 is located in its working position illustrated in Figure 4, while the switch 51 is located in its neutral position (also illustrated in this Figure). The connection between the source 26 and the motor 10 causes activation of this latter and the consequent displacement of the movable element 7 with respect to the reference element 8. The wiper element 17 is consequently displaced with respect to the support 15 on which the contact elements 16 are disposed, allowing the closure of the movable contact 46. When the wiper element 17 reaches the contact element 16 which is connected to the pad 19 of the coded electrical key 18 (this phase of operation is illustrated in Figure 5), the winding 37 is excited causing opening of the movable contact 38. In this condition, in fact, one terminal of the winding 37 communicates with the terminal 27 of the source 26, whilst the other terminal of this winding communicates with the other terminal 28 of the source 26 through the connecting lead 39, the wiper element 17, the contact element 16 mentioned above, the connecting lead 40 associated with it, the contact pad 19 of the coded electrical key 18, and the lead which connects the terminals 33 and 41. The opening of the movable contact 38 interrupts the connection between the terminal 28 of the source 26 and the terminal 44 of the electric motor 10 so that this latter stops, locking the movable element 7 in the position reached. Should it be desired automatically to lock the movable element 7 in the position corresponding to that in which the wiper element 17 comes into contact with the contact element 16 displaced towards the left as viewed in the Figure, it would be sufficient to insert the contact pad 19 in the position corresponding to the connecting lead associated with this contact element rather than in the position illustrated in the Figure.

If, at this point, the coded electrical key 18 is removed from its socket the connection of one of the terminals of the winding 37 with the terminal 28 of the source 26 is interrupted so that the winding becomes de-energised and the movable contact 38 returns to its closure position. At the same time, the removal of the key 18 causes the return of the switch 29 into its first working position (see Figure 6). In this condition the terminal 36 of the electric motor 10, rather than being in contact with the terminal 27 of the source 26 (as happens in the operating phase illustrated in Figure 4) comes into contact with the terminal 28 by means of the lead 35, the movable contact 46, the lead 45 and the switch 29. At the same time the terminal 44 of the motor 10 comes into contact with the terminal 27 of the source 26 by means of the connecting lead 43, the lead which connects the terminals 30 and 42 and the switch 29. Consequently the electric motor 10 starts to turn in the opposite sense to that in which it was turning during the preceding operating phase, carrying the wiper element 17 back towards its end position. When the wiper element 17 reaches this position (see Figure 7), the movable contact 46 opens interrupting the connection between the terminal 36 of the motor 10 and the terminal 28 of the source 26, consequently causing the electric motor 10 to stop.

Therefore, when the user removes the coded electrical key 18 from its socket, the various adjustable members each return to their associated end positions in such a way as to allow the user to get out of the passenger compartment of the vehicle easily.

The switch 48 gives the user the opportunity of cutting out the above described means of control and allows him to manually operate    the switch 51 in such a way as to make the electric motor 10 rotate in one direction or the other adjusting at will the position of the movable element 7.

Preferably the coded electrical key 18 is also used to replace the conventional ignition key of the motor vehicle.  In this case the key is provided with a further series of contacts 52 for operating, in a manner known per se, the anti-theft device with which the motor vehicle is provided.

Naturally, the principle of the invention remaining the same, the details of construction and the embodiments can be widely varied with respect to what has been described and illustrated purely by way of non-limitative example, without by this departing from the scope of the present invention.

The adjustment system according to the present invention is particularly   advantageous where the same motor vehicle is to be used by several people having different physical characteristics. Each of the users can advantageously employ their own coded electrical key coded according to their particular requirements in order to obtain an auto-

0030925

matic adjustment and personalisation of the driver's position following the introduction of the key into the socket provided for it.

CLAIMS

1. An adjustment system for automatically locating those members of a driver's position in a motor vehicle which are adjustable in position, such as the steering wheel, the seat squab and back of the driver's seat, the rear view mirror and the like, characterised in that the said system comprises:

actuator means (10) connectable to a source of electrical power (26) to cause a displacement of each adjustable member (7),

sensor means (16, 17) for detecting the position of each adjustable member (7) with respect to a reference element (8),

electric control means connected to the said sensor means (16, 17) and operable to control the opening and closing of the connection between the said actuator means (10) and the electrical power source (26), and

a coded electrical key (18) arranged to cooperate with the said electric control means to cause the closure of the connection between the said actuator means (10) and the electrical power source (26) in such a way as to determine the displacement of each adjustable member (7),

the said electrical control means being operative to interrupt the said connection whereby to set each adjustable member (7) in position, when the said sensor means (16, 17) detect the attainment by that member of a pre-established position dependent on the code of the coded electrical key (18).

2. An adjustment system according to Claim 1, characterised in that the said actuator means are constituted by a series of electric motors (10) each of which is provided with an output shaft (11) connected by means of a mechanical transmission (12, 13, 14) to a respective movable element (7), each said movable element (7) being rigidly connected to an associated said adjustable member for displacement therewith relative to the reference element (8) associated with this adjustable member.

3. An adjustment system according to Claim 2, characterised in that the movable element (7) and the reference element (8) associated with each adjustable member are provided one with a series of contact elements (16) spaced from one another and the other with a wiper element (17) arranged to electrically contact the said contact elements (16) in succession during the displacement of the movable element (7) with respect to the reference element (8), the said contact element (16) and the said wiper element (17) being connected with the electric control means in such a way as to constitute the said sensor means.

4. An adjustment system according to Claim 3, characterised in that the said electric control means comprise a first, normally-open, switch interposed in the said connection between the electrical power source (26) and the electric motor (10) associated with each movable element (7), the said coded electrical key (18) being operable mechanically to cause the closure of the said first switch whereby to activate, upon its operation, the electric motor (10) associated with each movable element (7); said electric control means further comprising for each movable element (7),

a normally-closed movable contact (38) interposed in the connection between a terminal (33) of the said first switch and a terminal (44) of the said electric motor (10) associated with said movable element (7),

a winding (37) associated with the movable contact (38) and operative upon excitation to open the said movable contact (38), the said winding having one terminal connected with a first terminal (27) of the electrical power source and the other terminal connected to the said wiper element (17), and

a plurality of connecting leads (40) for connecting each of the said contact elements (16) with a second terminal (28) of the electrical power source (26), each of the said connecting leads (40) having a discontinuity at a region intended to receive the said coded electrical key,

the said coded electrical key (18) being provided, for each movable element (7), with a conductor element (19) capable of being inserted into the discontinuity of one of the said connecting leads (40) associated with that movable element (7) in such a way as to connect the corresponding contact element (16) with the second terminal (28) of the electrical power source (26),

whereby, when the wiper element (17) reaches the said contact element (16) the said winding (37) becomes excited causing consequent opening of the said movable contact (38) and stopping of the respective associated electric motor (10) associated with the movable element (7).

5. An adjustment system according to Claim 4, characterised in that the said coded electrical key (18) includes an insulating support (19) provided, for each movable element (7), with a plurality of seats (24) respectively corresponding to the contact elements (16) associated with this movable element (7), the said conductor element being constituted by a contact pad (19) which can be received in any of the said seats (24).

6. An adjustment system according to Claim 4, characterised in that the insulating support (19) of the coded electrical key (18) is in the form of a flattened body having on each of its two major faces (22) a plurality of tracks (23) corresponding respectively to the different
movable elements (7), each of the said tracks (23) being
provided with the said seats (24), and the said contact
pad (19) being insertable in one of the seats (24) in
order locally to connect together the two opposite
faces (22) of the insulating support (19).

7. An adjustment system according to Claim 4, characterised in that the said electric control means further
comprise;

a second, normally-closed, switch for connecting
the terminals of the electrical power source with the
terminals of the electric motor (10) in a reverse manner
with respect to the connection obtainable by means of
the said first normally open switch,

the said second switch being maintained in an
open condition by the said coded electrical key following
the operation of this latter,

whereby, when the coded electrical key (18) is
removed, the said second switch returns to its closed
position activating the electric motor (10) in reverse
and consequently causing the return of the movable
element (7) towards its initial position,

the said system further comprising for each movable
element (7), a normally closed movable contact (46)
inserted in the connection between a terminal (36) of
the electrical motor (10) and a terminal of the said
second switch, the said movable contact (46) being
maintained in an open condition by the movable element
(7) when this latter is located in the said initial
position,

such that the reverse activation of the electric
motor (10) is terminated when the movable element (7)
returns to its said initial position.

8. An adjustment system according to Claim 7, characterised in that the said first switch and the said second switch are incorporated in a single two-position electric switch (29).

9. An adjustment system according to Claim 1, characterised in that the said system further comprises a control switch (48) for directly connecting the terminals of the electric motor (10) with the terminals of the electrical power source (26) and a third electric switch (51) for reversing the said connection.

10. An adjustment system according to Claim 1, characterised in that the said coded electrical key is also usable for controlling the ignition of the motor vehicle.

11. An adjustment system according to Claim 6, characterised in that the said coded electrical key is provided with a handle (20) carrying an identification plate (21).

FIG. 1

FIG. 2

FIG. 3

FIG. 4

FIG. 5

FIG. 6

FIG. 7

FIG. 8

## EUROPEAN SEARCH REPORT

European Patent Office

Application number

EP 80 83 0107.1

| Category | Citation of document with indication, where appropriate, of relevant passages | Relevant to claim |
|---|---|---|
| | DE – A1 – 2 640 528 (KEIPER KG)<br>* claim 1; fig. 2 *<br>-- | 1,2 |
| | EP – A1 – 0 001 297 (R. BOSCH GMBH)<br>* page 2, line 1 *<br>-- | 1 |
| | DE – A1 – 2 750 408 (PORSCHE AG)<br>* claim 1 *<br>-- | 1 |
| | GB – A – 2 013 367 (NISSAN MOTOR CO.)<br>* claim 1 *<br>-- | 1 |
| P | DE – A1 – 2 939 115 (KEIPER AUTOMOBIL-TECHNIK GMBH)<br>* claim 1 *<br>-- | 1 |
| P | DE – A1 – 2 904 719 (YMOS-METALLWERKE)<br>* claim 1 *<br>---- | 1 |

**CLASSIFICATION OF THE APPLICATION (Int. Cl.³)**

B 60 N 1/02

G 05 B 19/35

**TECHNICAL FIELDS SEARCHED (Int. Cl.³)**

B 60 N 1/00

B 60 R 16/00

B 60 R 27/00

G 05 B 19/00

G 05 D 3/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 26-02-1981 | BECKER |

EPO Form 1503.1 06.78